**Europäisches Patentamt**

**European Patent Office**

**Office européen des brevets**

(19)

(11) Veröffentlichungsnummer: **0 114 239**
**A2**

(12) **EUROPÄISCHE PATENTANMELDUNG**

(21) Anmeldenummer: **83111543.1**

(22) Anmeldetag: **18.11.83**

(51) Int. Cl.³: **G 01 L 9/12**
**G 01 L 13/02**

(30) Priorität: **25.11.82 DE 3243603**

(43) Veröffentlichungstag der Anmeldung:
**01.08.84 Patentblatt 84/31**

(84) Benannte Vertragsstaaten:
**DE FR GB IT NL**

(71) Anmelder: **Schoppe & Faeser GmbH**
**Schillerstrasse 72**
**D-4950 Minden(DE)**

(72) Erfinder: **Weh, Jürgen**
**In der Ecke 94**
**D-3066 Niedernwöhren(DE)**

(72) Erfinder: **Biskup, Jürgen**
**Vorlaenderstrasse 67**
**D-4950 Minden/Westfalen(DE)**

(72) Erfinder: **Freitag, Edmund**
**Erikaweg 8**
**D-4955 Hille 4(DE)**

(72) Erfinder: **Obermeier, Horst**
**Langenkamp 22**
**D-4971 Hüllhorst(DE)**

(74) Vertreter: **Mack, Hermann**
**c/o Hartmann & Braun AG Gräfstrasse 97**
**D-6000 Frankfurt (Main) 90(DE)**

(54) **Messkapsel für einen kapazitiven Differenzdruck-Messumformer.**

(57) Die Meßkapsel eines Differenzdruck-Meßumformers besteht aus zwei rotationssymmetrischen Meßkapselscheiben (2, 3), zwischen denen eine in ihrer Mittelebene aus einem Stück bestehende Meßmembran (1) angeordnet ist und die auf jeder Seite durch eine Trennmembran (6, 7) abgeschlossen ist. Auf jeder Seite der Meßmembran (1) ist eine Meßkammer (4, 5) über eine Durchgangsöffnung (10, 11) mit einer Trennkammer (8, 9) verbunden. Die Auslenkung der Meßmembran (1) ist ein Maß für den auf die Meßkapsel einwirkenden Differenzdruck. Der nicht zwischen den Meßkapselscheiben (2, 3) gehaltene Teil der Meßmembran (1) weist einen zentralen Bereich (1a) und einen diesen konzentrisch umgebenden ringförmigen Bereich (1b) geringerer Dicke auf. An mindestens einer Seite der Meßmembran (1) ist eine Referenzplatte (14, 15) über mindestens eine entkoppelnde Abstandseinrichtung an dem zentralen Bereich (1a) der Meßmembran gehalten. Die entkoppelnden Abstandseinrichtungen sind so gestaltet und angeordnet, daß sie bei einer Durchbiegung des zentralen Bereichs (1a) der Meßmembran eine Durchbiegung der Referenzplatte (14, 15) verhindern. Sich gegenüberliegende Flächen des zentralen Bereichs (1a) der Meßmembran (1) und der Referenzplatte (14, 15) sind als Elektroden eines Kondensators ausgebildet. Bei einseitiger Überlast kommt die Trennmembran (6, 7) an ihrem Membranbett zur Anlage, und das aus der Trennkammer (8, 9) verdrängte Füllvolumen wird durch die Auslenkung der Meßmembran (1) aufgenommen. Der dabei entstehende Innendruck ist ein Produkt aus dem verdrängten Volumen und der Membransteifigkeit, die durch die Membrandicke in dem ringförmigen Bereich der Meßmembran beeinflußbar ist. Es sind Ausführungsbeispiele angegeben, bei denen die Meßmembran, die Referenzplatten und die Meßkapselscheiben entweder nur aus Keramik oder nur aus Metall bestehen.

Fig.1

Schoppe & Faeser
GmbH

4950 Minden/Westfalen, 17.11.83
Schillerstraße 72          vTh/lw

**0114239**

BESCHREIBUNG GEÄNDERT
siehe Titelseite

## Meßkapsel für einen Differenzdruck-Meßumformer

Die Erfindung bezieht sich auf eine Meßkapsel für einen Differenzdruck-Meßumformer gemäß dem Oberbegriff des Anspruchs 1.

Eine Meßkapsel dieser Art ist aus der DE-PS 26 59 376 bekannt. Die Meßkapsel weist zwei rotationssymmetrische Meßkapselscheiben auf, zwischen denen eine Meßmembran angeordnet ist. Auf den äußeren Stirnflächen der Meßkapselscheiben sind je eine Trennmembran angeordnet. Die Trennmembranen bilden zusammen mit einer der beiden Meßkapselscheiben je eine Trennkammer, und die Meßmembran bildet zusammen mit einer der beiden Meßkapselscheiben je eine Meßkammer. In jeder Meßkapselscheibe befindet sich eine Durchgangsöffnung, die die Meßkammer mit der Trennkammer verbindet. Die Räume zwischen der Meßmembran und den Trennmembranen sind mit einer im wesentlichen inkompressiblen Flüssigkeit gefüllt. Die den Innenflächen der Trennmembranen gegenüberliegenden Wandungen der Meßkapselscheiben sind als Membranbetten ausgebildet. Bei einseitiger Überlast kommt die mit dieser beaufschlagte Trennmembran an ihrem Membranbett zur Anlage, bevor die Meßmembran eine zu große mechanische Belastung erfährt. Die Meßmembran besteht aus einer zwischen den Meßkapselscheiben eingespannten ersten Membran und einer Halbleitermembran, die zentrisch in der ersten

- 2 -

Membran angebracht ist und einen Teil ihrer Wandfläche bildet. Bei der Halbleitermembran handelt es sich um diejenige Membran, deren Auslenkung ein Maß für den zu messenden Differenzdruck ist. Dagegen ist die Federcharakteristik der ersten Membran so abgestimmt, daß ihre Auslenkung erst bei einem Druck beginnt, der zwischen dem dem Meßbereichsendwert entsprechenden Wirkdruck und dem der Überlastbarkeit der Halbleitermembran entsprechenden Druck liegt. Damit die Halbleitermembran von beiden Seiten mit Druck beaufschlagt werden kann, ist es erforderlich, daß die erste Membran in ihrer Mittelebene eine Öffnung aufweist. Die Halbleitermembran überdeckt diese Öffnung, und ist in einem ringförmigen Bereich mit der ersten Membran zusammengefügt. Diese Fügestelle bringt fertigungstechnische Probleme mit sich, da sie druckbelastet ist. Außerdem treten bei einseitiger Belastung der Meßmembran Scherspannungen in der Fügestelle zwischen der ersten Membran und der Halbleitermembran auf.

Der Erfindung liegt die Aufgabe zugrunde, eine Meßkapsel der eingangs genannten Art zu schaffen, bei der die zwischen den Meßkapselscheiben angeordnete Meßmembran keine Öffnung aufweist.

Diese Aufgabe wird erfindungsgemäß durch die im Kennzeichen des Anspruchs 1 angegebenen Merkmale gelöst. Bei der Meßkapsel nach der Erfindung beinhaltet die in ihrer Mittelebene aus einem Stück bestehende Meßmembran in ihrem ringförmigen Außenbereich die Überlastschutzfunktion und in ihrem kreisförmigen Zentralbereich die Meßfunktion. Damit sind keine Fügestellen zwischen dem Zentralbereich und dem ringförmigen Außenbereich erforderlich. Die Erfindung ermöglicht einen symmetrischen Aufbau der Meßkapsel in bezug auf die Mittelebene der Meßmembran, und erlaubt damit eine wechselseitige Beaufschlagung der Meßkapsel mit dem Differenzdruck bei gleicher Meßwerkskennlinie. Es ergeben sich kleinste Innenvolumina des Differenzdruck-Meßumformers und damit optimale Voraussetzungen für kleine Sensorfehler, wie Fehler in Abhängigkeit von Temperaturänderungen, Linearitätsfehler und Fehler in Abhängigkeit vom statischen Druck.

Aus der europäischen Patentanmeldung 0 059 488 ist eine kapazitive Druckmeßkapsel für einen Differenzdruck-Meßumformer mit zwei Meßkapselscheiben und einer zwischen diesen angeordneten Meßmembran bekannt. Sowohl die Meßkapselscheiben als auch die Meßmembran bestehen aus Silizium. Wie insbesondere die Figur 4 dieser Veröffentlichung in Verbindung mit dem Anspruch 2 zeigt, besteht zwar die Meßmembran in ihrer Mittelebene aus einem Stück, auch ist der zentrale Bereich der Meßmembran dicker als der diesen konzentrisch umgebende ringförmige Bereich. Wie sich jedoch insbesondere dem Anspruch 2 entnehmen läßt, ist der zentrale Bereich so dick gewählt, daß er keine Durchbiegung erfährt, während der den zentralen Bereich umgebende ringförmige Bereich die Meßfunktion übernimmt. Durch diese Maßnahme soll die Linearität der Verschiebung der Meßmembran in Abhängigkeit von der auf sie einwirkende Druckdifferenz verbessert werden. Die Frage des Schutzes der Meßmembran bei einseitiger Überlast ist in dieser Druckschrift nicht behandelt.

Vorteilhafte Weiterbildungen der erfindungsgemäßen Meßkapsel sind in den Unteransprüchen gekennzeichnet.

Die Merkmale des Anspruchs 2 geben eine vorteilhafte Ausgestaltung der im Anspruch 1 genannten entkoppelnden Abstandseinrichtungen zwischen dem zentralen Bereich der Meßmembran und den Referenzplatten an.

Entkoppelnde Abstandseinrichtungen zwischen einer Druckmeßmembran und einer Referenzplatte sind aus der DE-OS 29 48 165 bekannt.

0114239

Die Ansprüche 3 bis 10 geben Meßkapseln nach der Erfindung an, bei der sowohl die tragenden als auch die messenden Komponenten dieselbe Temperaturabhängigkeit aufweisen.

Die Erfindung wird im folgenden mit ihren weiteren Einzelheiten und Vorteilen anhand von in den Zeichnungen dargestellten Ausführungsbeispielen näher erläutert. Es zeigt

Figur 1     einen Schnitt durch einen ersten Differenzdruck-Meßumformer mit einer aus Keramik hergestellten Meßkapsel nach der Erfindung,

Figur 2     einen Schnitt durch die Meßmembran des in der Figur 1 dargestellten ersten Differenzdruck-Meßumformers,

Figur 3     eine Draufsicht auf die Meßmembran des in der Figur 1 dargestellten ersten Differenzdruck-Meßumformers,

Figur 4     eine räumliche Darstellung der Meßmembran und einer Referenzplatte des in der Figur 1 dargestellten ersten Differenzdruck-Meßumformers,

Figur 5a    eine prinzipielle Darstellung der Ruhelage der Meßmembran,

Figur 5b    eine prinzipielle Darstellung der Auslenkung der Meßmembran bei dem Differenzdruck, der dem Meßbereichsendwert entspricht,

Figur 5c    eine prinzipielle Darstellung der Auslenkung der Meßmembran bei einseitiger Überlast,

Figur 6a    einen Schnitt durch einen Teil der Meßmembran und die Referenzplatten einer weiteren Meßkapsel nach der Erfindung,

Figur 6b    eine Draufsicht auf die Referenzplatte und einen Teil der Meßmembran entsprechend Figur 6a,

Figur 7     einen Schnitt durch einen Meßumformer mit einer weiteren Meßkapsel nach der Erfindung,

Figur 8     einen Schnitt durch eine dritte, aus Metall hergestellte Meßkapsel nach der Erfindung,

Figur 9a    eine Draufsicht auf die Meßmembran und eine Referenzplatte der in der Figur 8 dargestellten Meßkapsel,

Figur 9b    einen gegenüber der Figur 8 in der Breite vergrößert dargestellten Schnitt durch die Meßmembran und die an ihr gehaltenen Referenzplatten,

Figur 10a   zeigt einen vergrößerten Ausschnitt aus den Figuren 9a und 9b,

Figur 10b   eine der Figur 10a entsprechende Darstellung
           mit nach innen geschwenkten Torsionsstegen und

Figur 10c   eine der Figur 10a entsprechende Darstellung
           mit nach außen geschwenkten Torsionsstegen.

Gleiche Teile sind mit den gleichen Bezugszeichen versehen.

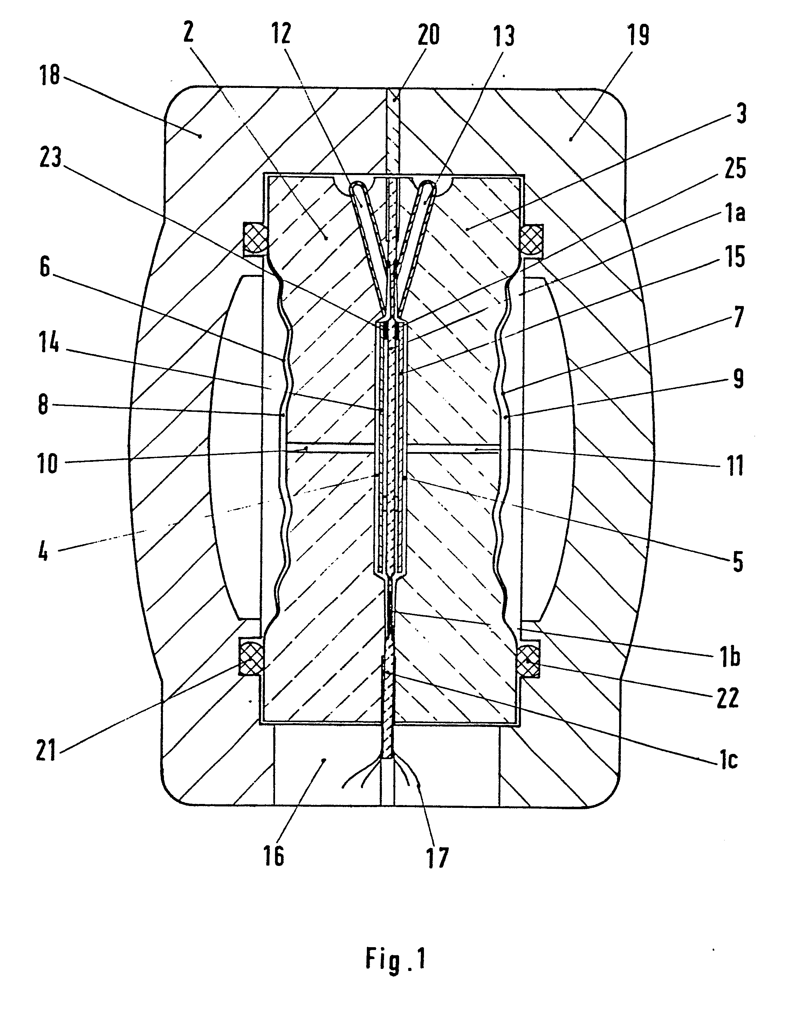

Die Figur 1 zeigt einen Schnitt durch einen Differenzdruck-Meßumformer mit einer Meßkapsel nach der Erfindung.
Eine Meßmembran aus Keramik mit den Bereichen 1a, 1b und
1c, die im folgenden als Meßmembran 1 bezeichnet ist, ist
zwischen zwei rotationssymmetrischen Meßkapselscheiben 2
und 3, die aus demselben keramischen Material wie die
Meßmembran bestehen, gehalten. Die Meßkapselscheiben 2
und 3 weisen konkave Seitenflächen auf, die zusammen mit
der Meßmembran 1 zwei Meßkammern 4 bzw. 5 und zusammen
mit zwei Trennmembranen 6 und 7 zwei Trennkammern 8 bzw.
9 bilden. Die Meßkammer 4 ist über eine Durchgangsöffnung 10 mit der Trennkammer 8 verbunden, und die Meßkammer 5 ist über eine weitere Durchgangsöffnung 11 mit der
Trennkammer 9 verbunden. Der Raum zwischen der Trennmembran 6 und der Meßmembran 1 (Trennkammer 8, Durchgangsöffnung 10, Meßkammer 4) und der Raum zwischen der Trennmembran 7 und der Meßmembran 1 (Trennkammer 9, Durchgangsöffnung 11, Meßkammer 5) sind mit einer im wesentlichen inkompressiblen Flüssigkeit, z.B. Silikonöl, gefüllt. Diese Flüssigkeit überträgt die auf die Trennmembranen 6 und 7 einwirkenden Drücke auf die Meßmembran 1,
wobei die Durchbiegung der Meßmembran 1 ein Maß für den
zu messenden Differenzdruck ist. Die Füllung mit der im
wesentlichen inkompressiblen Flüssigkeit erfolgt für den einen Raum über ein Füllrohr 12, das in die Meßkapselscheibe 2 eingelassen ist, und für den anderen Raum über ein Füllrohr 13, das in die Meßkapselscheibe 3 eingelassen ist. Nach der Füllung werden die Füllrohre 12 und 13 in bekannter Weise, z.B. durch Schweißen, gasdicht verschlossen.

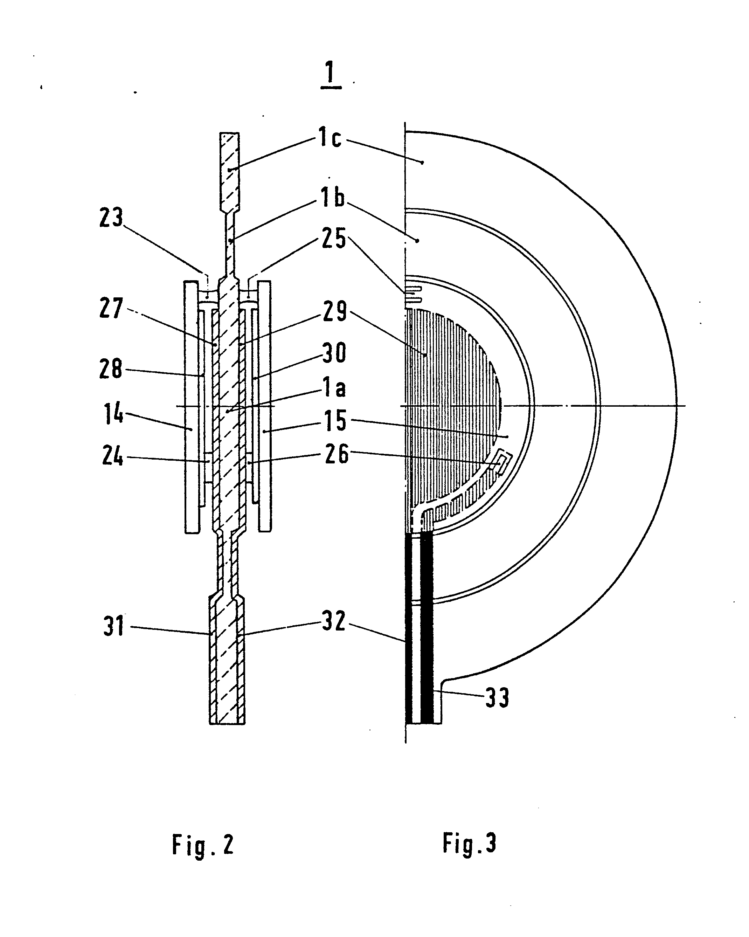

An der Meßmembran 1 ist auf jeder Seite eine Referenzplatte 14 bzw. 15 aus Keramik gehalten. Da die Meßmembran 1 und die Referenzplatten 14 und 15 sowie die Meßkapselscheiben 2 und 3 aus demselben keramischen Material bestehen, ergeben sich für diese Teile der Meßkapsel dieselben temperaturabhängigen Formänderungen. Anstelle von Keramik kann z.B. auch Quarzglas verwendet werden. Die Meßmembran 1 und die Referenzplatten 14 und 15 sind mit elektrisch leitenden Schichten versehen. Diese Schichten bilden auf jeder Seite der Meßmembran mindestens einen Kondensator. Bei einer Durchbiegung der Meßmembran ändern sich die Kapazitäten dieser Kondensatoren in gegenläufiger Richtung. Als elektrische Zuleitungen dienen Leiterbahnen, die in radialer Richtung auf der Meßmembran aufgebracht sind und von den Meßkammern 4 und 5 nach außen in einen Anschlußraum 16 führen. Dort sind - nur schematisch dargestellte - Anschlußleitungen 17 mit den Leiterbahnenden verbunden. Die Anschlußleitungen 17 führen zu einer hier nicht dargestellten elektronischen Schaltung, die die Kapazitätswerte der Kondensatoren auswertet. Einzelheiten der Meßmembran 1 und der an ihr befestigten Referenzplatten 14 und 15 sind weiter unten im Zusammenhang mit den Figuren 2 und 3 beschrieben.

Die oben beschriebene Meßkapsel ist in einem Meßumformergehäuse gehalten, das aus zwei Kappen 18 und 19 sowie einem Ring 20 besteht. Die Kappen 18 und 19 sowie der Ring 20 bestehen aus Metall. Die Kappen 18 und 19 sind miteinander verschraubt, wobei der Ring 20, der im Bereich des Anschlußraumes 16 unterbrochen ist, als Distanzausgleich dient. In eine Ringnut der Kappen 18 und 19 ist ein Dichtring 21 bzw. 22 eingelegt, so daß die Kappe 18 zusammen mit der Außenfläche der Trennmembran 6 einen ersten Druckraum bildet und die Kappe 19 zusammen mit der Außenfläche der Trennmembran 7 einen zweiten Druckraum bildet.

Die Figur 2 zeigt - in einer gegenüber der Figur 1 in der Breite vergrößerten Darstellung - einen Schnitt durch die Meßmembran und die Figur 3 eine entsprechende Draufsicht auf die Meßmembran 1 und die Referenzplatte 15. Die Meßmembran 1 weist einen zentralen Bereich 1a, einen diesen konzentrisch umgebenden ringförmigen Bereich 1b sowie einen weiteren ringförmigen Bereich 1c auf. Der ringförmige Bereich 1c ist mit den Meßkapselscheiben 2 und 3 durch Kleben oder Löten druckfest und gasdicht verbunden. Der ringförmige Bereich 1b ist nicht so dick wie der zentrale Bereich 1a, der die Referenzplatten 14 und 15 trägt. An dem zentralen Bereich 1a der Meßmembran sind die Referenzplatten 14 und 15 an jeweils drei gleichmäßig über den Umfang verteilten Abstandselementen aus einem in Dickschichttechnik aufgebrachten Widerstandsmaterial gehalten. Von den Abstandselementen sind in der Figur 2 auf jeder Seite der Meßmembran 1 nur zwei zu erkennen, die mit den Bezugszeichen 23, 24 sowie 25, 26 versehen sind. Diese Abstandselemente bestimmen den Abstand zwischen den Referenzplatten 14 und 15 und dem zentralen Bereich 1a der Meßmembran 1 im nicht ausgelenkten Zustand. Sie sind Bestandteil einer entkoppelnden Abstandseinrichtung, die eine Durchbiegung der Referenzplatten bei einer Auslenkung der Meßmembran 1 verhindert. Der zentrale Bereich 1a der Meßmembran 1 und die Referenzplatten 14 und 15 sind mit elektrisch leitenden Schichten 27 bis 30 versehen, von denen die Schichten 27 und 28 sowie die Schichten 29 und 30 zwei Kondensatoren bilden, deren Kapazitäten sich bei Durchbiegung der Meßmembran gegenläufig ändern. Die Abstandselemente 24 und 26 bestehen aus einem elektrisch leitfähigen Widerstandsmaterial, das in Dickschichttechnik auf die Meßmembran aufgebracht ist. Durch diese Maßnahme ist es möglich, die elektrischen Anschlüsse der Kondensatorbeläge 27 bis 30 auf der Meßmembran nach außen zu führen. Hierzu dienen in radialer Richtung angeordnete Leiterbahnen, die mit den leitenden Schichten auf dem zentralen Bereich 1a der Meßmembran und den Abstandselementen 24 und 26 verbunden sind. Von diesen Leiterbahnen sind in der Figur 2 nur die mit den Bezugszeichen 31 und 32 versehenen Leiterbahnen und in der Figur 3 nur die mit den Bezugszeichen 32 und 33 versehenen Leiterbahnen sichtbar. Die in der Figur 3 sichtbaren Teile der Leiterbahnen 32 und 33 sind schwarz dargestellt, während die von der Referenzplatte 15 verdeckte leitende Schicht 29 sowie die ebenfalls verdeckten Teile der Leiterbahnen 32 und 33 auf dem zentralen Bereich 1a der Meßmembran 1 durch senkrechte Schraffur dargestellt sind.

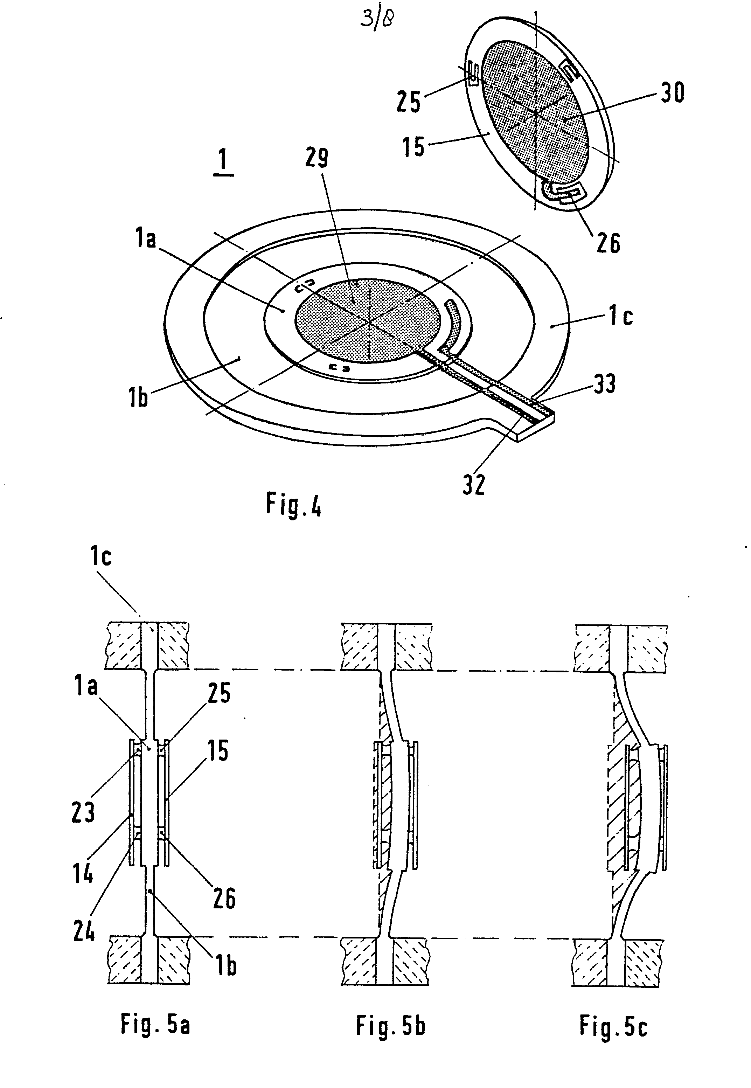

Die Figur 4 zeigt eine räumliche Darstellung der Meßmembran 1 und der Referenzplatte 15, bevor beide unter Wärmeeinwirkung miteinander verbunden worden sind. Die einzelnen Bauelemente sind anhand der Figuren 2 und 3 bereits erläutert worden.

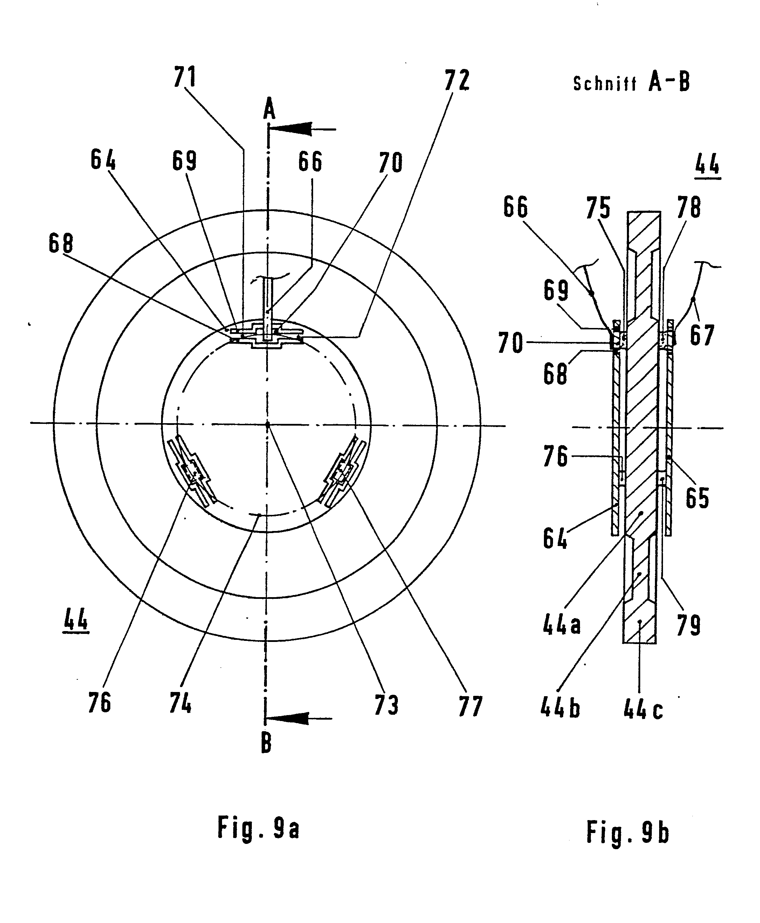

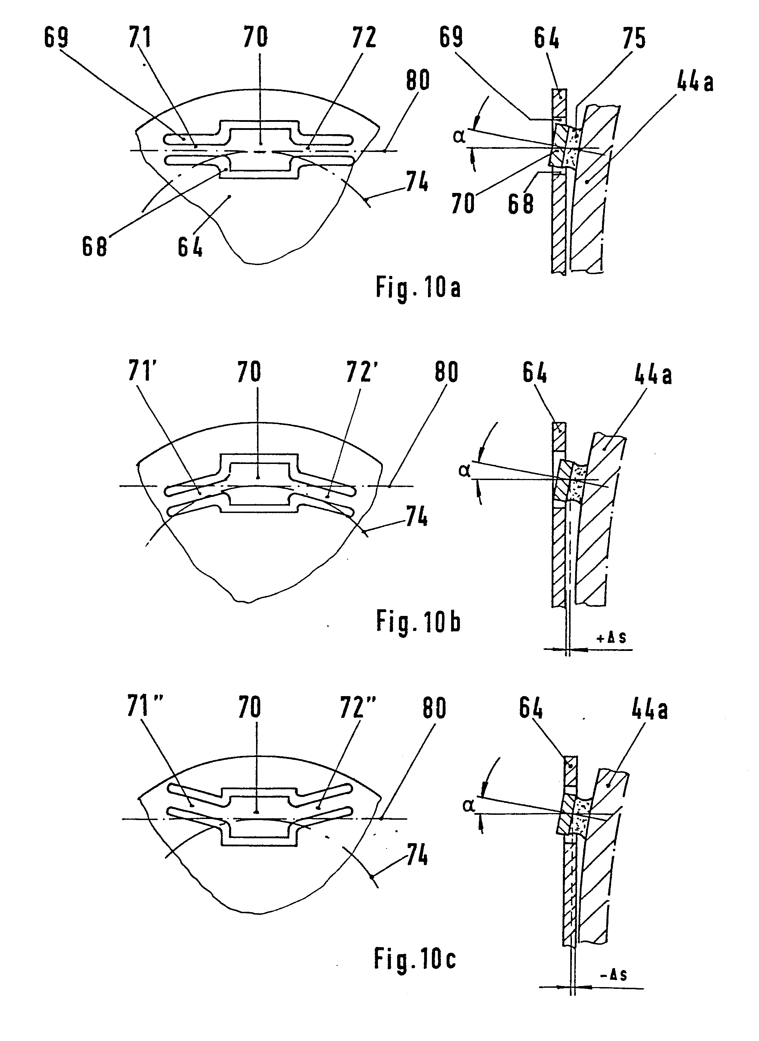

Die Figuren 5a, 5b und 5c zeigen nebeneinander von links nach rechts eine prinzipielle Darstellung der Auslenkung der eingespannten Meßmembran. Die Figur 5a zeigt die Ruhelage der Meßmembran, die Figur 5b zeigt die Auslenkung der Meßmembran bei dem Differenzdruck, der dem Meßbereichsendwert entspricht, und die Figur 5c zeigt die Auslenkung bei dem Differenzdruck, der sich einstellt, wenn eine der Trennmembranen bei einseitiger Überlast an dem zugehörigen Membranbett anliegt. Wie insbesondere die Figur 5c für den Überlastfall zeigt, ist die Auslenkung der Meßmembran in dem zentralen Bereich 1a der Meßmembran geringer als in dem diesen ringförmig umgebenden Bereich 1b der Meßmembran. Die entkoppelnden Abstandseinrichtungen zwischen dem zentralen Bereich 1a der Meßmembran 1 und den Referenzplatten 14 bzw. 15, von denen in den Figuren 5a, 5b und 5c nur die Abstandselemente 23 bis 26 sichtbar sind, nehmen die bei der Auslenkung der Meßmembran auftretenden Torsionskräfte auf, so daß die beiden Referenzplatten 14 und 15 keine Durchbiegung erfahren und plan sowie parallel zueinander bleiben. Einzelheiten der Abstandseinrichtungen zwischen der Meßmembran und den Referenzplatten sind weiter unten anhand der Figuren 9a und 9b sowie 10a, 10b und 10c beschrieben.

Bei der erfindungsgemäßen Meßkapsel übernimmt der ringförmige Bereich 1b der Meßmembran den Schutz gegen Beschädigung bei einseitiger Überlast. Das durch bei Überlast aus der Trennkammer verdrängte Füllvolumen wird durch Auslenkung der Meßmembran aufgenommen. Der dabei entstehende Innendruck ist ein Produkt aus dem verdrängten Volumen und der Membransteifigkeit, die durch die Membrandicke in dem ringförmigen Bereich 1b der Meßmembran beeinflußbar ist. Unabhängig hiervon kann die Membrandicke in dem zentralen Bereich 1a der Meßmembran 1 im Hinblick auf den Nennmeßbereich des Differenzdruck-Meßumformers gewählt werden. Der symmetrische Aufbau der Meßkapsel erlaubt eine wechselseitige Beaufschlagung mit dem Differenzdruck bei gleicher Meßkapselkennlinie.

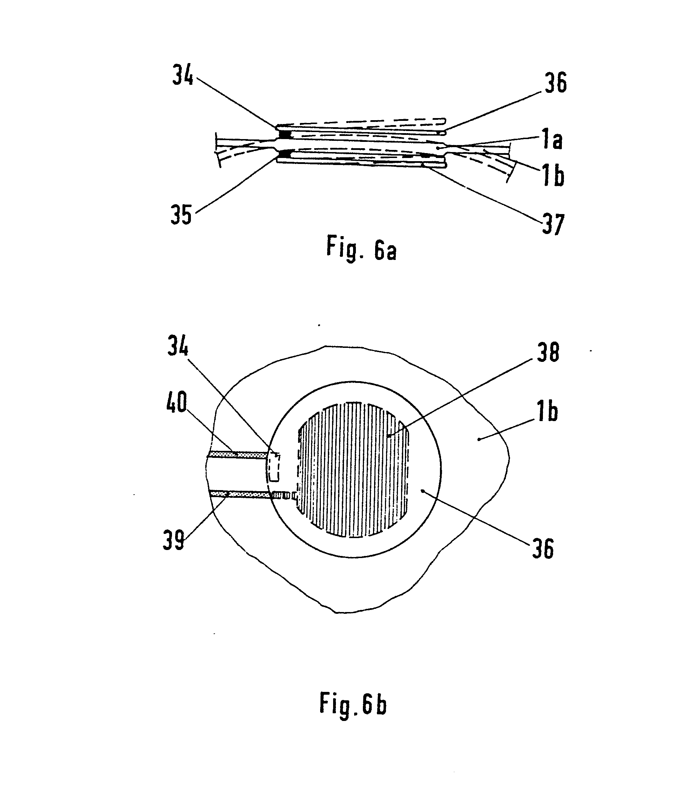

Die Figuren 6a und 6b zeigen einen Ausschnitt aus einer Meßmembran, an der die Referenzplatten an jeweils nur einem Punkt mit der Meßmembran verbunden sind. Die Figur 6a zeigt als Schnitt den zentralen Bereich 1a und einen Teil des diesen ringförmig umgebenden Bereichs 1b der Meßmembran. An dem zentralen Bereich 1a sind über Abstandselemente 34 und 35 Referenzplatten 36 bzw. 37 gehalten. Die Auslenkung der Meßmembran und der Referenzplatten bei Beaufschlagung mit einem von Null verschiedenen Differenzdruck ist in gestrichelten Linien dargestellt. Die Referenzplatten 36 und 37 werden um den Steigungswinkel der Membranbiegelinie in ihrem Anlenkungspunkt 34 bzw. 35 gedreht, d.h. die Referenzplatten 36 und 37 sind parallel zu der Tangente an die Membranbiegelinie im Anlenkungspunkt. Es wirken somit keine Torsionsmomente auf die Referenzplatten 36 und 37 ein. Die Figur 6b zeigt eine Draufsicht auf den in der Figur 6a dargestellten Bereich der Meßmembran. Der zentrale Bereich 1a ist von der Referenzplatte 36 verdeckt. Die auf den zentralen Bereich 1a aufgebrachte leitende Schicht 38 ist ebenfalls durch die Referenzplatte 36 verdeckt. Eine Leiterbahn 39 stellt die elektrische Verbindung zum hier nicht dargestellten Anschlußraum (16 in Figur 1) her. Die elektrische Verbindung von der leitenden Schicht auf der Referenzplatte 36 zu dem Anschlußraum erfolgt über eine weitere Leiterbahn 40 und das Abstandselement 34, das wie die Abstandselemente 23 bis 26 in der Figur 2 elektrisch leitfähig ist.

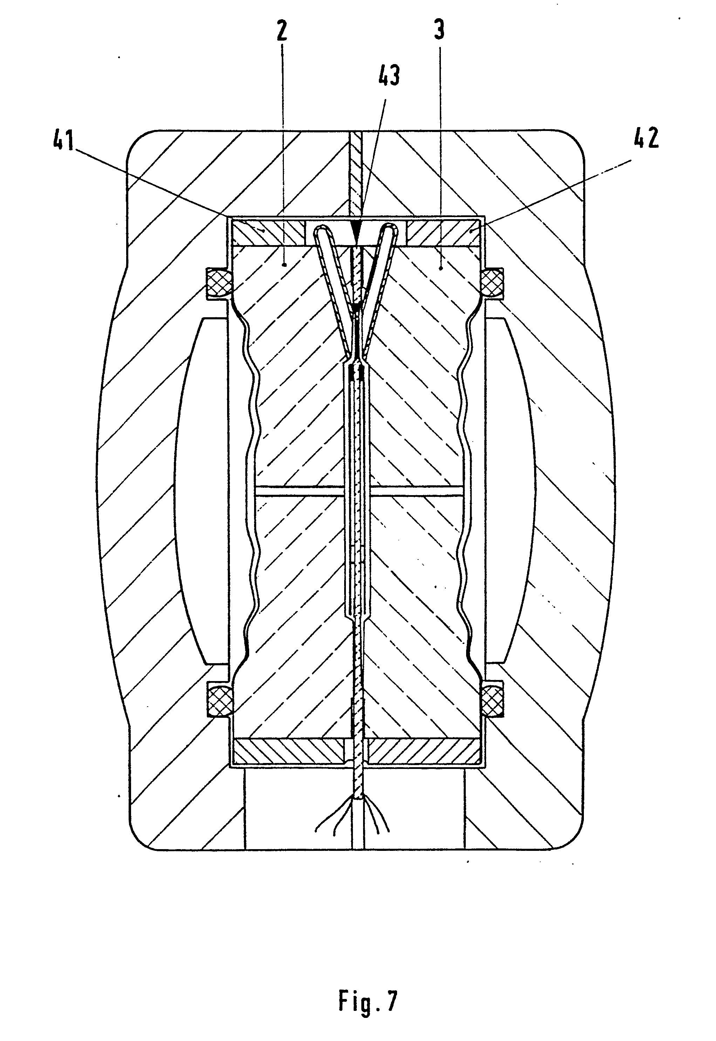

Die Figur 7 entspricht der Figur 1. In dieser Figur sind nur die Teile mit Bezugszeichen versehen, die zusätzlich zu denjenigen der Figur 1 vorhanden sind. Nach dem Zusammenfügen der Meßmembran 1 und der Meßkapselscheiben 2 und 3, z.B. durch Kleben oder Löten, wird über die so entstandene Meßkapsel von jeder Seite aus ein metallischer Stützring 41 bzw. 42 über die Meßkapsel geschoben, bis beide Stützringe aneinanderstoßen, wobei für die Füllrohre (12, 13 in Figur 1) und das die Leiterbahnen tragende Teil der Meßmembran 1 Aussparungen vorgesehen sind. Die metallischen Stützringe 41 und 42 werden dann durch eine Schweißnaht 43 miteinander verbunden. Diese Maßnahme bewirkt eine mechanische Entlastung der Fügestelle, an der die Meßkapselscheiben und die Meßmembran miteinander verbunden sind.

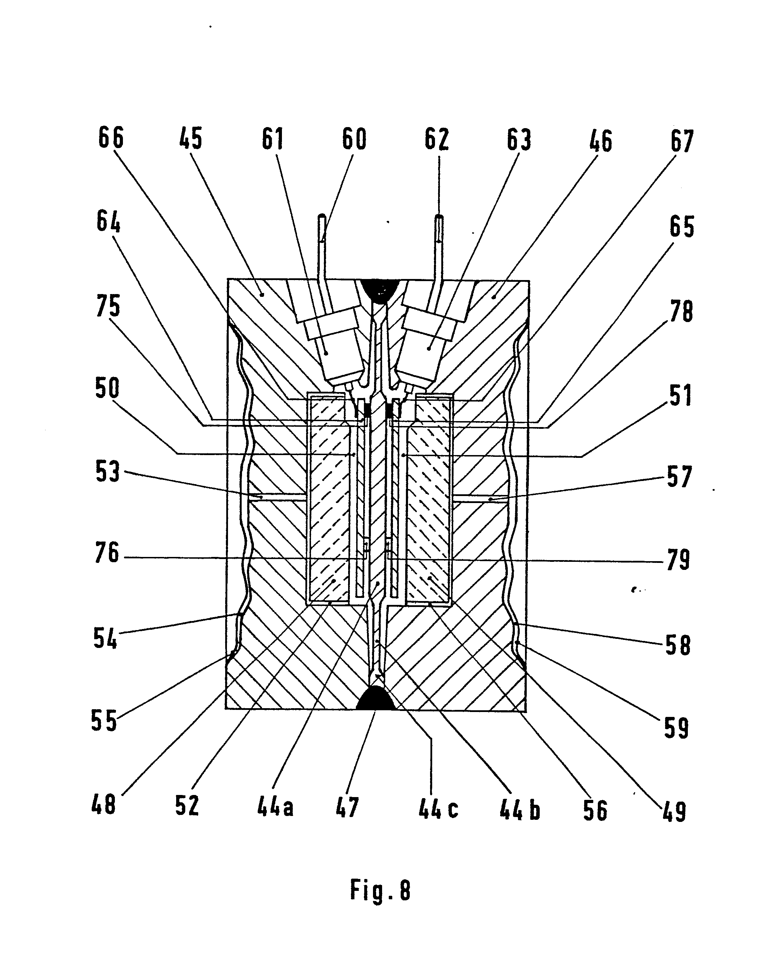

Die Figur 8 zeigt einen Schnitt durch eine aus Metall hergestellte Meßkapsel nach der Erfindung. Eine Meßmembran 44 mit den Bereichen 44a, 44b und 44c ist mit ihrem äußeren ringförmigen Bereich 44c zwischen zwei Meßkapselscheiben 45 und 46 gehalten. In dem Ausführungsbeispiel bestehen die Meßmembran 44 sowie die Meßkapselscheiben 45 und 46 aus einem austenitischen Chrom-Nickel-Stahl, wobei das Material der Meßmembran 44 federelastisch ist. Bei der Wahl des Materials von Meßmembran und Meßkapselscheiben ist darauf zu achten, daß sie den gleichen thermischen Ausdehnungskoeffizienten aufweisen und daß das Material der Meßmembran federelastisch ist. Der äußere ringförmige Bereich 44c der Meßmembran ist mit den beiden Meßkapselscheiben 45 und 46 durch eine Schweißnaht 47 verbunden. Die Meßkapselscheiben 45 und 46 weisen auf ihrer der Meßmembran 44 zugewandten Seite je eine zylinderförmige Ausnehmung auf, in die jeweils ein keramischer Einsatz 48 bzw. 49 eingesetzt ist. Der Raum zwischen dem keramischen Einsatz 48 und der Meßmembran 44 bildet eine erste Meßkammer 50, und der Raum zwischen dem keramischen Einsatz 49 und der Meßmembran 44 bildet eine zweite Meßkammer 51. Die Meßkammer 50 ist über einen Kanal 52 des keramischen Einsatzes 48 und eine Durchgangsöffnung 53 mit einer ersten Trennkammer 54 verbunden, die von einer ersten Trennmembran 55 und der Meßkapselscheibe 45 begrenzt ist. Die Trennmembran 55 ist in üblicher Weise mit der Meßkapselscheibe 45 verschweißt. In entsprechender Weise ist die Meßkammer 51 über einen Kanal 56 des keramischen Einsatzes 49 und eine Durchgangsöffnung 57 mit einer zweiten Trennkammer 58 verbunden, die von einer zweiten Trennmembran 59 und der Meßkapselscheibe 46 begrenzt ist. Der Raum zwischen der Trennmembran 55 und der Meßmembran 44 (Trennkammer 54, Durchgangsöffnung 53, Kanal 52, Meßkammer 50) ist mit einer im wesentlichen inkompressiblen Flüssigkeit, z.B. Silikonöl, gefüllt. Mit der gleichen Flüssigkeit ist auch der Raum zwischen der

Trennmembran 59 und der Meßmembran 44 (Trennkammer 58, Durchgangsöffnung 57, Kanal 56, Meßkammer 51) gefüllt. Diese Flüssigkeit überträgt die auf die Trennmembranen 55 und 59 einwirkenden Drücke auf die Meßmembran 44, wobei die Durchbiegung der Meßmembran 44 ein Maß für den zu messenden Differenzdruck ist. Die Füllung mit der im wesentlichen inkompressiblen Flüssigkeit erfolgt für den einen Raum über ein metallisches Füllrohr 60, das in eine Glasdurchführung 61 eingeschmolzen ist, die ihrerseits druckdicht in der Meßkapselscheibe 45 gehalten ist. Die Füllung mit der im wesentlichen inkompressiblen Flüssigkeit erfolgt für den anderen Raum über ein weiteres metallisches Füllrohr 62, das in eine weitere Glasdurchführung 63 eingeschmolzen ist, die ihrerseits druckdicht in der Meßkapselscheibe 46 gehalten ist. Nach der Füllung werden die Füllrohre 60 und 62 in bekannter Weise, z.B. durch Schweißen, gasdicht verschlossen.

An der Meßmembran 44 ist auf jeder Seite eine Referenzplatte 64 bzw. 65 gehalten. Die Referenzplatten 64 und 65 sind über jeweils drei gleichmäßig über den Umfang verteilte Abstandselemente aus einem elektrisch isolierenden Material, z.B. Glas, an dem zentralen Bereich 44a der Meßmembran gehalten. Die Abstandselemente sind Bestandteile von entkoppelnden Abstandseinrichtungen, die bei einer Durchbiegung des zentralen Bereichs 44a der Meßmembran eine Durchbiegung der Referenzplatten 64 und 65 verhindern. Einzelheiten der Abstandseinrichtungen zwischen dem zentralen Bereich 44a der Meßmembran und den Referenzplatten 64 und 65 sind weiter unten anhand der Figuren 9a und 9b sowie 10a, 10b und 10c beschrieben. Der zentrale Bereich 44a der Meßmembran und die Referenzplatten 64 und 65 bilden zwei in Reihe geschaltete Kondensatoren, wobei die Meßmembran als gemeinsame Mittelelektrode dient. Bei einer Durchbiegung der Meßmembran 44 ändern sich die Kapazitäten dieser Kondensatoren in gegenläufiger Richtung.

Als elektrische Zuleitungen zu den Referenzplatten 64 und 65 dienen Kontaktfedern 66 bzw. 67. Die Kontaktfeder 66 verbindet die Referenzplatte 64 mit dem gegenüber der Meßkapselscheibe 45 elektrisch isolierten Füllrohr 60, und die Kontaktfeder 67 verbindet die Referenzplatte 65 mit dem gegenüber der Meßkapselscheibe 46 elektrisch isolierten Füllrohr 62. Die Kontaktfedern 66 und 67 sind so ausgelegt, daß sie den größten in axialer Richtung auftretenden Auslenkungen folgen können, ohne die Federcharakteristik der Meßmembran 44 zu beeinflussen. Die Meßmembran 44 ist durch die Schweißnaht 47 auch elektrisch mit den Meßkapselscheiben 45 und 46 verbunden. Die Meßkapsel sowie die Füllrohre 60 und 62 sind mit einer hier nicht dargestellten elektronischen Schaltung elektrisch verbunden, die die Kapazitätswerte der beiden Kondensatoren auswertet und in ein elektrisches Ausgangssignal umformt, das ein Maß für den auf die Meßmembran 44 einwirkenden Differenzdruck ist. Die oben beschriebene Meßkapsel ist in an sich bekannter Weise in einem Meßumformergehäuse gehalten.

Die Figur 9a zeigt eine Draufsicht auf die Meßmembran 44 und die Referenzplatte 64, und die Figur 9b zeigt - in einer gegenüber der Figur 8 in der Breite vergrößerten Darstellung - einen Schnitt durch die Meßmembran 44 und die an ihr gehaltenen Referenzplatten 64 und 65. Die Meßmembran 44 weist einen zentralen Bereich 44a auf, dessen Auslenkung in Abhängigkeit von dem auf die Meßmembran 44 einwirkenden Druck in ein elektrisches Ausgangssignal umgesetzt wird. Dieser Bereich ist ungefähr doppelt so dick wie der ihn konzentrisch umgebende ringförmige Bereich 44b der Meßmembran 44. Der ringförmige Bereich 44b wird aufgrund der geringeren Dicke stärker ausgelenkt als der zentrale Bereich 44a, und dient zusammen mit der sich bei einseitiger Überlast an das zugehörige Membranbett anlegenden Trennmembran als Überlastschutz. Der ringförmige Bereich 44b ist von dem ringförmigen Bereich 44c umgeben, über den die Meßmembran mit den hier nicht dargestellten Meßkapselscheiben 45 und 46 verbunden ist. Die Referenzplatten 64 und 65 sind über je drei gleichmäßig über ihren Umfang verteilte und untereinander gleich aufgebaute Abstandseinrichtungen mit dem zentralen Bereich 44a der Meßmembran 44 verbunden. Im folgenden wird daher nur der Aufbau einer Abstandseinrichtung beschrieben. Die Referenzplatte 64 ist mit zwei Ausnehmungen 68 und 69 versehen. Diese Ausnehmungen bilden ein Auflageplättchen 70 und zwei Torsionsstege 71 und 72. Die Torsionsstege 71 und 72 verbinden das Auflageplättchen 70 mit dem restlichen Teil der Referenzplatte 64. Die Torsionsstege 71 und 72 liegen dabei tangential zu einem konzentrisch zur Mittelachse 73 der Meßmembran 44 verlaufenden Kreis, der in der Figur 9a mit dem Bezugszeichen 74 versehen ist, in der Ebene der Referenzplatte 64. Zwischen dem zentralen Bereich 44a der Meßmembran 44 und dem Auflageplättchen 70 ist ein Abstandselement 75 aus Glas angeordnet, dessen Dicke den Abstand zwischen dem zentralen Bereich 44a der Meßmembran 44 und der Referenzplatte 64 in der Ruhelage der Meßmembran bestimmt. Weitere Abstandselemente zwischen dem zentralen Bereich 44a der Meßmembran 44 und den Referenzplatten 64 bzw. 65, die in den Figuren 8, 9a oder 9b dargestellt sind, sind mit den Bezugszeichen 76 bis 79 versehen.

Die Figuren 10a, 10b und 10c zeigen Einzelheiten der Abstandseinrichtungen. In jeder der drei Figuren sind eine Draufsicht und ein Schnitt nebeneinander gestellt, wobei in den drei Figuren jeweils von derselben Auslenkung der Meßmembran ausgegangen wird. Die Figur 10a zeigt einen vergrößerten Ausschnitt aus den Figuren 9a und 9b. Aus Gründen der besseren Übersichtlichkeit wurden die Kontaktfeder 66, die in den Figuren 9a und 9b mit dem Auflageplättchen 70 verbunden ist, und die rechte Hälfte des zentralen Bereichs 44a der Meßmembran 44, an der die Referenzplatte 65 gehalten ist, nicht dargestellt. Wie die Draufsicht der Figur 10a zeigt, liegen die Torsionsstege 71 und 72 in Richtung einer Tangente 80 an den konzentrisch zu der Mittelachse der Meßmembran 44 verlaufenden Kreis 74. Während in der Ruhelage der Meßmembran die Meßmembran parallel zu den Referenzplatten liegt, weicht bei der angenommenen Auslenkung der Meßmembran 44 die Senkrechte auf die Meßmembran im Bereich des Abstandselementes 75 um einen Winkel $\alpha$ von der Senkrechten auf die Referenzplatte 64 ab. Wie die Schnittdarstellung der Figur 10a zeigt, folgen das Abstandselement 75 und das Auflageplättchen 70 der Auslenkung der Meßmembran. Die Torsionsstege 71 und 72 nehmen die Drehung um den Winkel $\alpha$ auf, und die Referenzplatte 64 bleibt eben. Jedoch verringert sich der Abstand zwischen dem zentralen Bereich 44a der Meßmembran 44 und der Referenzplatte 64. Der Abstand zwischen dem zentralen Bereich 44a der Meßmembran 44 und der hier nicht dargestellten Referenzplatte 65 (vergl. Figur 9b) vergrößert sich in entsprechender Weise gegenüber der Ruhelage der Meßmembran 44. In der Figur 10b sind die Torsionsstege 71' und 72' gegenüber der Tangente 80 an den Kreis 74 leicht zur Mittelachse der Meßmembran 44 hin geschwenkt. Diese Schwenkung der Torsionsstege führt bei gleichem Winkel $\alpha$ zu einem um den Wert $\Delta s$ vergrößerten Abstand zwischen dem zentralen Bereich 44a der Meßmembran 44 und der Referenzplatte 64 gegenüber der in der Figur 10a dargestellten Ausführungsform, bei der die Torsionsstege 71 und 72 in Richtung der Tangente 80 an den Kreis 74 liegen. In der Figur 10c sind die Torsionsstege 71'' und 72'' gegenüber der Tangente 80 an den Kreis 74 leicht von der Mittelachse der Meßmembran 44 weg geschwenkt. Diese Schwenkung der Torsionsstege führt bei gleichem Winkel $\alpha$ zu einem um den Wert $\Delta s$ verkleinerten Abstand zwischen dem zentralen Bereich 44a der Meßmembran 44 und der Referenzplatte 64 gegenüber der in der Figur 10a dargestellten Ausführungsform, bei der die Torsionsstege 71 und 72 in Richtung der Tangente 80 an den Kreis 74 liegen. Durch die Ausgestaltung der Torsionsstege 71' und 72' entsprechend der Figur 10b und durch die Ausgestaltung der Torsionsstege 71'' und 72'' entsprechend der Figur 10c lassen sich eine Verstärkung bzw. eine Abschwächung des Meßeffektes erreichen.

Die in der Figur 8 dargestellten keramischen Einsätze 48 und 49 dienen mehreren Zwecken gleichzeitig. Da die Meßkapselscheiben 45 und 46 aus Metall bestehen, bilden die keramischen Einsätze 48 und 49 eine kapazitive Entkopplung der Referenzplatten 64 und 65 von den Meßkapselscheiben 45 bzw. 46. Außerdem kompensieren die keramischen Einsätze 48 und 49 aufgrund ihrer geringen thermischen Ausdehnung einen wesentlichen Teil der temperaturbedingten Ölvolumenänderung. Weiterhin erlauben die keramischen Einsätze 48 und 49 eine einfache Einstellung der Sensordämpfung durch entsprechende Ausgestaltung der Kanäle 52 und 56. Wird in die an die Meßkapselscheiben angrenzende Stirnfläche der keramischen Einsätze eine spiralförmig von der Durchgangsöffnung 53 bzw. 57 zu den Kanälen 52 bzw. 56 führende Rille eingeformt, so können Anforderungen des Explosionsschutzes nach Ex "d" und DIN EN 50018 auf einfache Weise erfüllt werden.

Bei den in den Zeichnungen dargestellten Ausführungsbeispielen wurde von einem Elektrodenabstand von 25 $\mu$m und einem Nennhub von 5 $\mu$m für einen Differenzdruck von 100 % des Meßbereiches ausgegangen. Da diese geringen Abstände sich nicht maßstabsgetreu darstellen lassen, mußte insbesondere der Elektrodenabstand stark verzerrt gezeichnet werden. Die Membrandicke liegt in der Größenordnung von 1 mm sowohl für die Keramikausführung als auch für die Metallausführung. Der Außendurchmesser des zentralen Bereichs der Meßmembran liegt in der Größenordnung von 24 mm, der Außendurchmesser des diesen konzentrisch umgebenden ringförmigen Bereichs liegt in der Größenordnung von 44 mm und der Außendurchmesser des zwischen den Meßkapselscheiben gehaltenen Bereichs der Meßmembran liegt in der Größenordnung von 50 mm. Auch diese Angaben gelten sowohl für die Keramikausführung als auch für die Metallausführung.

Eine weitere Ausführungsform der erfindungsgemäßen Meßkapsel sieht die Fertigung von Meßmembran und Referenzplatten aus Silizium und die Fertigung der Meßkapselscheiben aus Metall vor. Wie bei der reinen Metallausführung der Meßkapsel dienen keramische Einsätze zwischen den Meßkapselscheiben und den an der Meßmembran gehaltenen Referenzplatten zur kapazitiven Entkopplung der Referenzplatten von den Meßkapselscheiben. Bei dieser Ausführungsform wird die Meßmembran aus Silizium mit einem Haltering aus Metall verklebt, der denselben Außendurchmesser wie die Meßkapselscheiben aufweist, und der Haltering wird mit den Meßkapselscheiben verschweißt. Diese Ausführungsform erlaubt eine weitere Miniaturisierung von Meßkapsel und diese enthaltenden Differenzdruck-Meßumformer.

Patentansprüche

1. Meßkapsel für einen Differenzdruck-Meßumformer mit zwei rotationssymmetrischen Meßkapselscheiben, zwischen denen eine Meßmembran angeordnet ist, die auf beiden Seiten der Meßmembran je eine Meßkammer begrenzt,

- mit zwei Trennmembranen, die zusammen mit einer Meßkapselscheibe je eine Trennkammer bilden,
- mit mindestens einer Durchgangsöffnung in jeder Meßkapselscheibe, die die Meßkammer und die Trennkammer verbindet,
- bei der die den Innenflächen der Trennmembranen gegenüberliegenden Wandungen der Meßkapselscheiben als Membranbetten ausgebildet sind,
- bei der der nicht zwischen den Meßkapselscheiben gehaltene Teil der Meßmembran einen zentralen Bereich und einen diesen konzentrisch umgebenden ringförmigen Bereich aufweist,
- wobei die Meßkammern und die Meßmembran so ausgebildet sind, daß bei einseitiger Überlast die mit dieser beaufschlagte Trennmembran an ihrem Membranbett zur Anlage kommt, bevor die Meßmembran eine zu große mechanische Belastung erfährt,
- wobei die Räume zwischen der Meßmembran und den Trennmembranen mit einer im wesentlichen inkompressiblen Flüssigkeit gefüllt sind,

dadurch gekennzeichnet,

- daß die Meßmembran (1; 44) in ihrer Mittelebene aus einem Stück besteht,
- daß der zentrale Bereich (1a; 44a) der Meßmembran dicker als der diesen konzentrisch umgebende ringförmige Bereich (1b; 44b) ist,
- daß an mindestens einer Seite der Meßmembran (1; 44) eine Referenzplatte (14, 15; 36, 37; 64, 65) über mindestens eine entkoppelnde Abstandseinrichtung (23 bis 26; 34, 35; 68 bis 72, 75 bis 79) an dem zentralen Be-

- 2 -

reich (1a; 44a) der Meßmembran gehalten ist, wobei die entkoppelnden Abstandseinrichtungen (23 bis 26; 34, 35; 68 bis 72, 75 bis 79) so gestaltet und angeordnet sind, daß sie bei einer Durchbiegung des zentralen Bereichs (1a; 44a) der Meßmembran eine Durchbiegung der Referenzplatte (14, 15; 36, 37; 64, 65) verhindern,

- daß sich gegenüberliegende Flächen (27 und 28, 29 und 30; 44a und 64, 44a und 65) des zentralen Bereichs (1a; 44a) der Meßmembran und der Referenzplatte (14, 15; 36, 37; 64, 65) als Elektroden eines Kondensators ausgebildet sind.

2. Meßkapsel nach Anspruch 1, dadurch gekennzeichnet,
- daß die Referenzplatten (64, 65) im Umfangsbereich mit Ausnehmungen (68, 69) versehen sind, die für jede entkoppelnde Abstandseinrichtung ein Auflageplättchen (70) bilden, das über mindestens einen Torsionssteg (71, 72) mit dem restlichen Teil der Referenzplatte (64) verbunden ist,
- daß die Torsionsstege (71, 72) in der Ebene der Referenzplatte (64) im wesentlichen tangential zu einem konzentrisch zur Mittelachse (73) der Meßmembran (44) verlaufenden Kreis (74) liegen und
- daß zwischen dem zentralen Bereich (44a) der Meßmembran (44) und den Auflageplättchen (70) Abstandselemente (75 bis 79) angeordnet sind.

3. Meßkapsel nach Anspruch 1 oder Anspruch 2, dadurch gekennzeichnet, daß sowohl die Meßkapselscheiben (2, 3) als auch die Meßmembran (1) aus Keramik bestehen.

4. Meßkapsel nach Anspruch 3, dadurch gekennzeichnet,
- daß auf jeder Seite der Meßmembran (1) eine Referenzplatte (14, 15; 36, 37) an dem zentralen Bereich (1a) der Meßmembran gehalten ist und
- daß der zentrale Bereich (1a) der Meßmembran und die Referenzplatten (14, 15; 36, 37) mit elektrisch leitenden Schichten (27 bis 30; 38) versehen sind.

5. Meßkapsel nach Anspruch 4, dadurch gekennzeichnet,
daß die Meßmembran (1) mit in radialer Richtung angeordneten Leiterbahnen (31 bis 33; 39, 40) versehen ist, die
die elektrische Verbindung zu den elektrisch leitenden
Schichten (27 bis 30; 38) herstellen.

6. Meßkapsel nach Anspruch 5, dadurch gekennzeichnet,
- daß die Abstandselemente (23 bis 26; 34, 35) aus einem
  elektrisch leitfähigen Widerstandsmaterial bestehen
  und
- daß mindestens eines (24, 26; 34) von ihnen auf jeder
  Seite der Meßmembran (1) die elektrische Verbindung
  zwischen der elektrisch leitenden Schicht (28, 30; 38)
  auf der Referenzplatte (14, 15; 36) und der zugehörigen Leiterbahn (31, 33; 40) auf der Meßmembran (1)
  herstellt.

7. Meßkapsel nach einem der vorhergehenden Ansprüche,
dadurch gekennzeichnet, daß zwei metallische Ringe (41,
42) konzentrisch zu den beiden Meßkapselscheiben (2, 3)
angeordnet und dort miteinander verschweißt sind.

8. Meßkapsel nach Anspruch 1 oder 2, dadurch gekennzeichnet, daß sowohl die Meßkapselscheiben (45, 46) als
auch die Meßmembran (44) aus Metall bestehen.

9. Meßkapsel nach Anspruch 8, dadurch gekennzeichnet,
- daß auf jeder Seite der Meßmembran (44) eine Referenzplatte (64, 65) an dem zentralen Bereich (44a) der
  Meßmembran gehalten ist,
- daß die Abstandselemente (75 bis 79) zwischen Meßmembran (44) und Referenzplatten (64, 65) aus einem elektrisch isolierenden Material bestehen,

- 4 -

- daß jede Meßkapselscheibe (45, 46) eine elektrische Durchführung (60 bis 63) aufweist und
- daß der elektrische Anschluß der Referenzplatten (64, 65) von einem Auflageplättchen (70) der Referenzplatten (64, 65) zu einer der elektrischen Durchführungen (60 bis 63) über je eine Kontaktfeder (66, 67) erfolgt.

10. Meßkapsel nach Anspruch 9, dadurch gekennzeichnet, daß jede Meßkapselscheibe (45, 46) im Bereich der Referenzplatten (64, 65) eine Ausnehmung aufweist, in die ein keramischer Einsatz (48, 49) eingesetzt ist.

Fig.1

<u>1</u>

1c

1b

25

23

27

29

28

30

14

1a

24

15

26

31

32

33

Fig. 2

Fig. 3

0114239

Fig. 4

Fig. 5a  Fig. 5b  Fig. 5c

Fig. 6a

Fig.6b

Fig. 7

Fig. 8

71  72

A

Schnift A-B

64  69  66  70

68

44

44

76  74  73  77

B

**Fig. 9a**

66  75  78

44

69

70  67

68

76  65

64

44a  79

44b  44c

**Fig. 9b**

Fig. 10a

Fig. 10b

Fig. 10c